# EUROPEAN PATENT APPLICATION

(11) **EP 4 052 865 A1**
(43) Date of publication of application: **07.09.2022**
(21) Application number: 22156487.5
(22) Date of filing: 14.02.2022
(51) Int. Cl.: B25J 9/16

(54) **INFORMATION PROCESSING APPARATUS, ROBOT SYSTEM, INFORMATION PROCESSING METHOD, PROGRAM, AND RECORDING MEDIUM**

(30) Priority: 05.03.2021 JP 2021035217; 27.01.2022 JP 2022011329
(71) Applicant: CANON KABUSHIKI KAISHA, OHTA-KU Tokyo 146-8501 (JP)
(72) Inventor: MAEDA, Yasuharu, Ohta-ku, 146-8501 (JP)
(74) Representative: TBK

(57) **Abstract**

An information processing apparatus includes an information processing portion (311) configured to simulate behavior of a virtual robot (100A) and a virtual workpiece (W11A) in a virtual environment. The information processing portion (311) is configured to set a linking condition (trsfl) for linking the virtual workpiece (W11A) with a predetermined portion of the virtual robot (100A).

## Description

### BACKGROUND OF THE INVENTION

### Field of the Invention

The present invention relates to a robot.

### Description of the Related Art

In a factory, kitting work in which workpieces in bulk are each put on a tray or the like, and assembly work in which a product is assembled by fitting or inserting the supplied workpiece into another workpiece. In these types of work, industrial robots are used for automating the factory.

In each of the kitting work and the assembly work performed by the industrial robots, conveyance operation is performed. In this operation, a robot holds a workpiece, and conveys the workpiece to a predetermined position. Thus, it is necessary for a user to teach a position at which the robot holds the workpiece, and a motion which the robot performs after holding the workpiece at the position. The teaching needs to be performed so that the robot will work without contacting the equipment around the robot.

Japanese Patent Laid-Open No. 2017-87300 describes a technique related to offline teaching. In this technique, setting is performed for determining whether a virtual workpiece is displayed or not when the operation of a virtual robot is simulated.

### SUMMARY OF THE INVENTION

The present invention in its first aspect provides an information processing apparatus as specified in claims 1 to 22.

The present invention in its second aspect provides a robot system as specified in claim 23.

The present invention in its third aspect provides a method of manufacturing products as specified in claim 24.

The present invention in its fourth aspect provides an information processing method as specified in claim 25.

The present invention in its fifth aspect provides a program as specified in claim 26.

The present invention in its sixth aspect provides a computer-readable recording medium as specified in claim 27.

Further features of the present invention will become apparent from the following description of exemplary embodiments with reference to the attached drawings.

### BRIEF DESCRIPTION OF THE DRAWINGS

FIG 1 is a diagram illustrating a robot system of a first embodiment.
FIG 2A is a diagram illustrating a robot of the first embodiment.
FIG 2B is a diagram illustrating a robot hand of the first embodiment.
FIG 3A is a diagram illustrating an information processing apparatus of the first embodiment.
FIG 3B is a block diagram of the information processing apparatus of the first embodiment.
FIG 4 is a diagram illustrating a virtual space simulated by the information processing apparatus of the first embodiment.
FIG 5 is a flowchart of an information processing method of the first embodiment.
FIG 6 is a diagram illustrating one example of display images of the first embodiment.
FIG 7 is a diagram illustrating one example of display images of the first embodiment.
FIG 8 is a diagram illustrating one example of display images of the first embodiment.
FIG 9 is a diagram illustrating one example of display images of the first embodiment.
FIG 10 is a schematic diagram for illustrating calculation for linking a virtual workpiece with a virtual robot hand in the first embodiment.
FIG 11A is a diagram illustrating one example of lists of target objects that are set for a virtual workpiece in the first embodiment.
FIG 11B is a diagram illustrating one example of lists of target objects that are set for the virtual workpiece in the first embodiment.
FIG 12 is a diagram illustrating one example of motion of a virtual robot, determined in a process of the first embodiment.
FIG 13 is a diagram illustrating one example of display images of the first embodiment.
FIG 14 is a flowchart illustrating one example of processes of the first embodiment.
FIG 15 is a diagram illustrating one example of display images of a second embodiment.
FIG 16 is a diagram illustrating one example of display images of the second embodiment.
FIG 17 is a diagram illustrating one example of display images of the second embodiment.

### DESCRIPTION OF THE EMBODIMENTS

Even if only the operation in which the display state of a virtual workpiece held by a virtual robot is switched between a display state and a non-display state, a user can only check the behavior of the virtual workpiece by viewing the image. Thus, it has been desired to improve user workability for simulation.

One or more aspects of the present invention are to improve the user workability for simulation.

Hereinafter, some embodiments of the present invention will be described in detail with reference to the accompanying drawings.

### First Embodiment

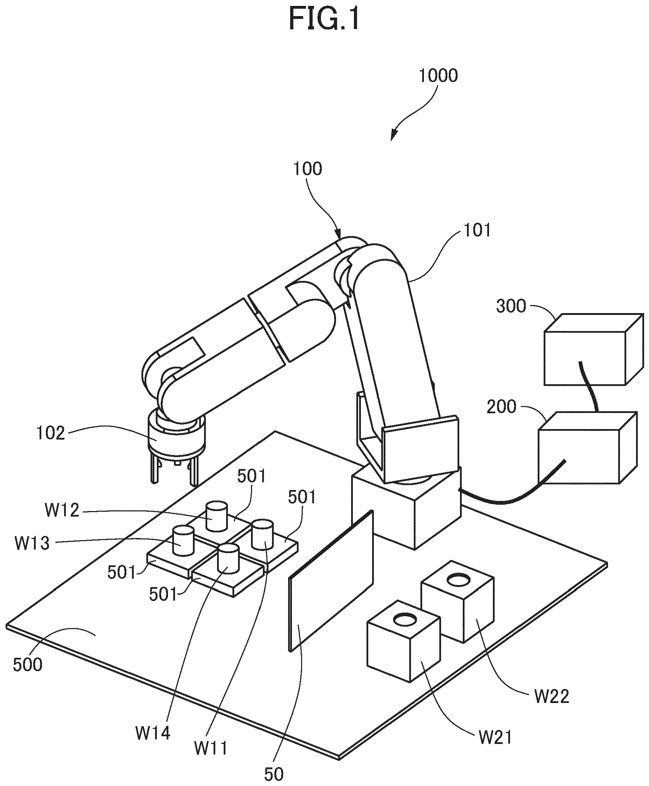

FIG 1 is a diagram illustrating a robot system 1000 of a first embodiment. The robot system 1000 includes a robot 100, a control apparatus 200, and an information processing apparatus 300.

The robot 100 is an industrial robot, and is used for manufacturing products. The robot 100 is a manipulator, and includes a robot arm 101 and a robot hand 102 that is one example of end effectors. The robot 100 is positioned and disposed on a stand 500, for example.

Around the robot 100, a plurality of workpieces W11, W12, W13, and W14, a plurality of workpieces W21 and W22, and a wall 50 are positioned and disposed on the stand 500. The workpieces W11 to W14 are first workpieces, and the workpieces W21 and W22 are second workpieces.

The workpieces W11 to W14 are disposed on workpiece supporting stands 501, which are positioned on the stand 500. Thus, the workpieces W11 to W14 are positioned with respect to the stand 500 via the workpiece supporting stands 501. The robot 100 manufactures a product by assembling one of the workpieces W11 to W14 to one of the workpieces W21 and W22.

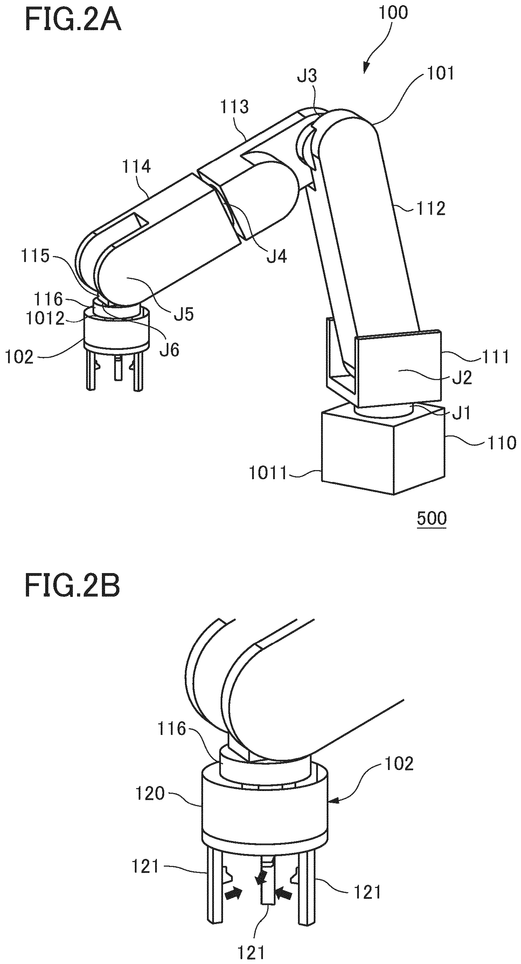

FIG 2A is a diagram illustrating the robot 100 of the first embodiment. FIG 2B is a diagram illustrating the robot hand 102 of the first embodiment. The robot arm 101 is a vertically articulated robot arm, for example. A fixed end 1011 that is the base end of the robot arm 101 is fixed to the stand 500. A free end 1012 that is the distal end of the robot arm 101 has the robot hand 102 attached to the free end1012. The robot arm 101 includes a base 110, and a plurality of links 111 to 116. The base 110 and the links 111 to 116 are linked with each other via joints J1 to J6, so that the links 111 to 116 can be rotated by the joints J1 to J6. In the first embodiment, the base 110 is the fixed end 1011, and the link 116 is the free end 1012.

In each of the joints J1 to J6, a motor (not illustrated) is disposed as a power source. The motor (not illustrated), disposed in each of the joints J1 to J6, drives a corresponding one of the joints J1 to J6, that is, a corresponding one of the links 111 to 116, so that the robot 100 can take a variety of postures.

The robot hand 102 can hold each of the workpieces W11 to W14. In the first embodiment, as illustrated in FIG 2B, the robot hand 102, which can hold each of the workpieces W11 to W14, includes a hand body 120 that includes a driving portion, and a plurality of fingers 121 that are supported by the hand body 120. The plurality of fingers 121 are driven directly by the driving portion of the hand body 120 in a direction in which the fingers 121 are moved closer to and separated from each other. In FIG 2B, the direction in which the plurality of fingers 121 are moved closer to each other is indicated by arrows. Note that although the description will be made for a case where the robot hand 102 is a hold-type hand, the present disclosure is not limited to this. For example, the robot hand 102 may be a suction-type hand.

The control apparatus 200 illustrated in FIG 1 controls the robot 100, depending on motion information of the robot 100, that is, on teach data that represents a robot program. The control apparatus 200 obtains the teach data from the information processing apparatus 300. The teach data contains the information on commands and the information on teach points. In the first embodiment, the control apparatus 200 causes the robot 100 to hold any one of the plurality of workpieces W11 to W14, by moving the robot 100 depending on the teach data. In addition, the control apparatus 200 manufactures a product by causing the robot 100 to assemble the workpiece to any one of the plurality of workpieces W21 and W22.

The information processing apparatus 300 is a computer, and serves as a teaching apparatus or a simulator. In the first embodiment, the information processing apparatus 300 creates the teach data by performing computer simulation, that is, offline teaching. The teach data created by the information processing apparatus 300 is outputted to the control apparatus 200. The method of outputting the teach data to the control apparatus 200 is not limited to a particular method. For example, the teach data created by the information processing apparatus 300 may be outputted to the control apparatus 200 by using wire or wireless communications, or via a storage device (not illustrated).

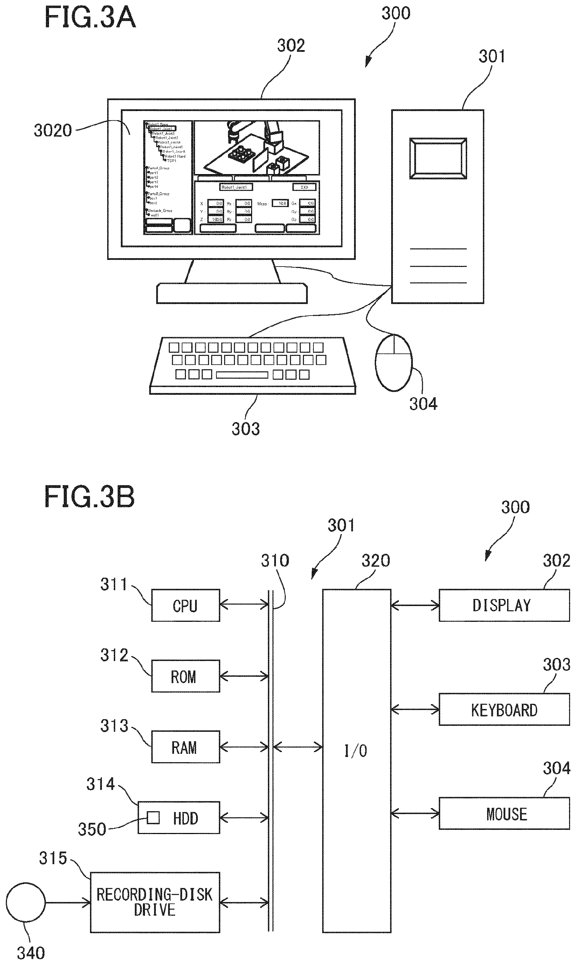

FIG 3A is a diagram illustrating the information processing apparatus 300 of the first embodiment. The information processing apparatus 300 includes an apparatus body 301, a display 302 that is connected to the apparatus body 301 and that is one example of display devices, and a keyboard 303 and a mouse 304 that are connected to the apparatus body 301 and that are one example of input devices. Note that although the following description will be made for a case where the information processing apparatus 300 is a desktop PC that is a general-purpose computer, the present disclosure is not limited to this. For example, the information processing apparatus 300 may be another general-purpose computer such as a laptop PC, a tablet PC, or a smartphone, or may be a teaching pendant or a computer used exclusively as a simulator. In another case, the information processing apparatus 300 may be included in the control apparatus 200. That is, the control apparatus 200 may have a function of the simulator.

FIG 3B is a block diagram of the information processing apparatus 300 of the first embodiment. The apparatus body 301 of the information processing apparatus 300 includes a central processing unit: CPU 311, which is a processor. In addition, the apparatus body 301 includes, as a storage portion, a read only memory: ROM 312, a random access memory: RAM 313, and a hard disk drive: HDD 314. In addition, the apparatus body 301 includes a recording-disk drive 315, and an I/O 320 that is an input/output interface. The CPU 311, the ROM 312, the RAM 313, the HDD 314, the recording-disk drive 315, and the I/O 320 are communicatively connected with each other via a bus 310.

The ROM 312 is a non-transitory storage device. The ROM 312 stores a base program that is read by the CPU 311 when the computer is started. The RAM 313 is a storage device that is temporarily used in a computing process, which is performed by the CPU 311. The HDD 314 is a non-transitory storage device that stores various types of data, such as results of a computing process performed by the CPU 311. In the first embodiment, the HDD 314 stores a program 350. The program 350 is a piece of application software. The CPU 311 serves as an information processing portion that simulates the behavior of a virtual robot and a virtual workpiece in a virtual environment, as described later, by executing the program 350.

The recording-disk drive 315 reads various types of data and a program stored in a recording disk 340. The I/O 320 serves as an interface between the information processing apparatus 300 and an external apparatus. The I/O 320 is connected with the display 302, the keyboard 303, and the mouse 304. The display 302 displays an image that serves as a user interface, and an image on information that a user inputs by using the keyboard 303 and the mouse 304. The teach data that contains the information on teach points is created by the CPU 311 that executes the program 350.

In the first embodiment, the HDD 314 is a computer-readable non-transitory recording media, and stores the program 350. However, the present disclosure is not limited to this. The program 350 may be recorded in any recording medium as long as the recording medium is a computer-readable non-transitory recording medium. For example, a flexible disk, an optical disk, a magneto-optical disk, a magnetic tape, a nonvolatile memory, or the like may be used as the recording medium for providing the program 350 to the computer.

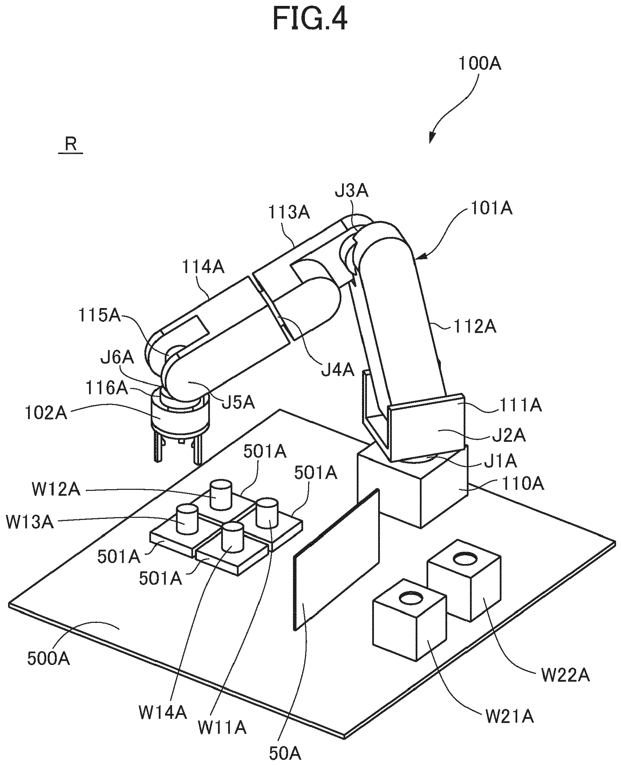

FIG 4 is a diagram illustrating a virtual space R simulated by the information processing apparatus 300 of the first embodiment. The CPU 311 defines the virtual space R illustrated in FIG 4, as a virtual environment. Virtual objects defined in the virtual space R are pieces of three-dimensional model data, such as CAD data. In FIG 4, the virtual objects are illustrated, visualized as a structure for convenience of description.

The objects defined in the virtual space R of FIG 4 will be described. In the virtual space R, a virtual stand 500A and a virtual robot 100A are defined. The virtual stand 500A and the virtual robot 100A are pieces of three-dimensional model data obtained by simulating the stand 500 and the robot 100, which are illustrated in FIG 1. The virtual robot 100A is defined on the virtual stand 500A. The virtual robot 100A includes, as a plurality of portions, a virtual base 110A, a plurality of virtual links 111A to 116A, and a virtual robot hand 102A. The virtual links 111A to 116A are defined so as to be rotated by joints J1A to J6A, in order for the virtual robot 100A to achieve the same motion as the robot 100 illustrated in FIG 1. The virtual robot hand 102A is one example of virtual end effectors. In the first embodiment, the virtual robot hand 102A is also one example of a predetermined portion.

Around the virtual robot 100A defined on the virtual stand 500A in the virtual space R, virtual workpieces W11A to W14A, W21A, and W22A are defined. The virtual workpieces are pieces of three-dimensional model data obtained by simulating the workpieces W11 to W14, W21, and W22, which are illustrated in FIG 1. The virtual workpieces W11A to W14A are first virtual workpieces, and the virtual workpieces W21A and W22A are second virtual workpieces. The virtual workpieces W11A to W14A are defined so as to be disposed on virtual supporting stands 501A. In addition, a virtual wall 50A is defined on the virtual stand 500A in the virtual space R. The virtual wall 50A is a piece of three-dimensional model data obtained by simulating the wall 50. The CPU 311 performs the simulation in which the virtual robot 100A assembles any one of the virtual workpieces W11A to W14A to any one of the virtual workpieces W21A and W22A. The virtual space R illustrate in FIG 4 is displayed, as a still or moving image, on a display screen 3020 of the display 302 illustrated in FIG 3A.

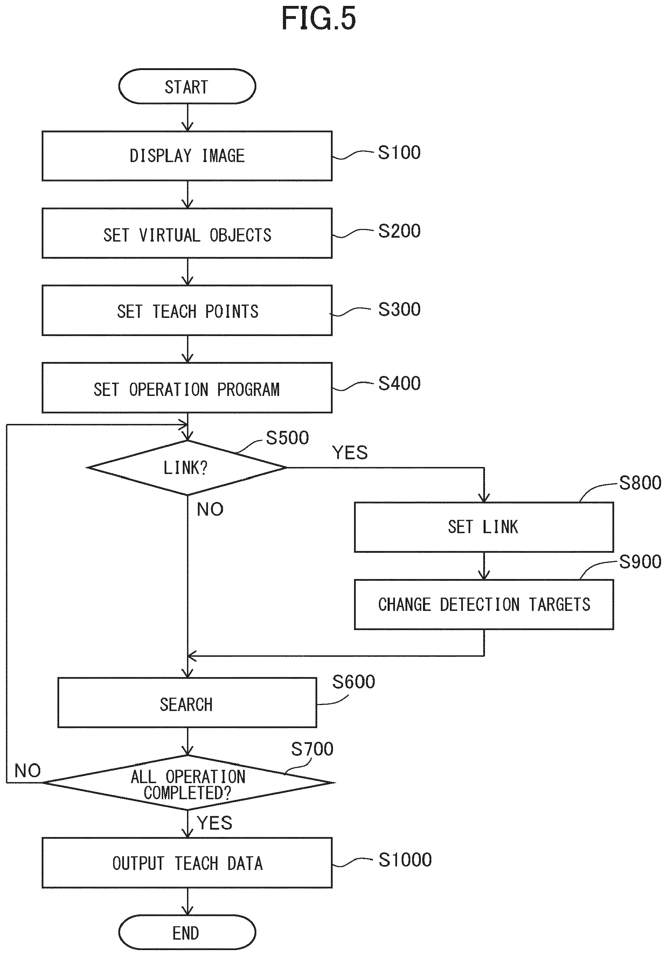

FIG 5 is a flowchart of an information processing method of the first embodiment. The CPU 311 executes steps S100 to S1000, depending on the program 350. In the steps, the CPU 311 creates the teach data, which is a robot program; and outputs the teach data to the control apparatus 200.

In Step S100, the CPU 311 starts the program 350, and causes the display 302 to display an image that serves as a user interface, on the display screen 3020 of the display 302.

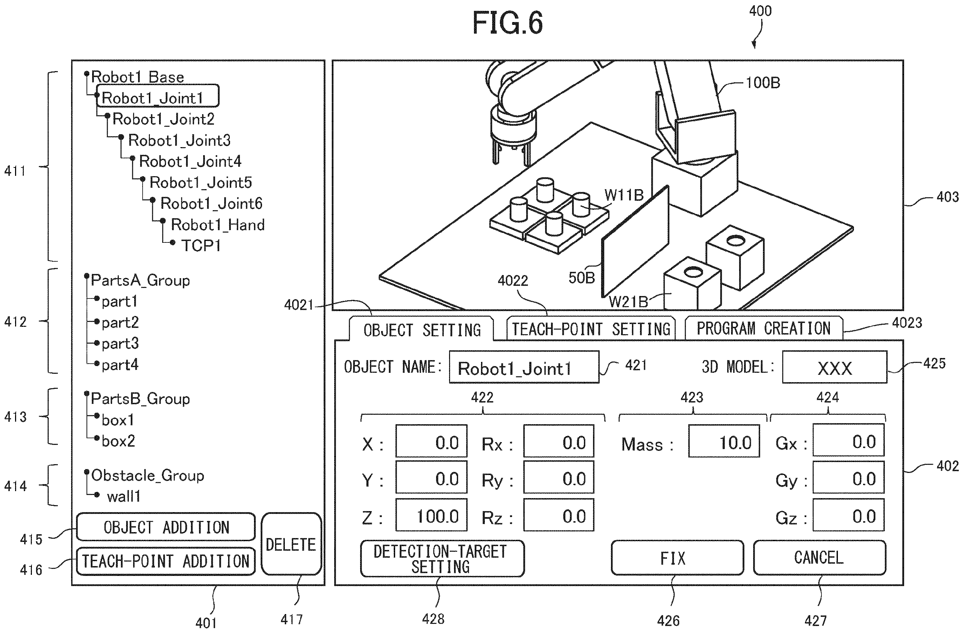

The image displayed on the display screen 3020 of the display 302 will be described. The image displayed on the display 302 is controlled by the CPU 311. FIG 6 is a diagram illustrating one example of display images 400 of the first embodiment, displayed on the display 302. The CPU 311 serves as a simulator by executing the program 350, and causes the display 302 to display the image 400 illustrated in FIG 6, on the display screen 3020 of the display 302. The image 400 serves as an interface between a user, who is a worker, and the information processing apparatus 300. The image 400 displayed on the display 302 mainly includes three display portions: a list display portion 401, a setting display portion 402, and a 3D display portion 403.

In the list display portion 401, a list of objects that are set by a user is displayed in a hierarchical structure. Since the hierarchical structure, or a parent-child relationship, is formed between objects, it is possible that the change in position of a parent object causes the change in position of a child object.

In the list display portion 401, groups 411 to 414 are formed by a user, in accordance with the real space illustrated in FIG 1. The group 411 is a group of objects that represents the robot 100. The group 412 is a group of objects that represents the workpieces W11 to W14. The group 413 is a group of objects that represents the workpieces W21 and W22. The group 414 is a group of an object that represents the wall 50.

In addition, in the list display portion 401, a plurality of buttons 415, 416, and 417 is displayed. The button 415 is provided with a name of "object addition". The button 416 is provided with a name of "teach-point addition". The button 417 is provided with a name of "delete".

The setting display portion 402 is a display portion that serves as an interface via which a user inputs the information on a virtual object, the information on a teach point, and the information on an operation program. The display on the setting display portion 402 can be changed by using three tabs 4021, 4022, and 4023. Specifically, a user can input each of the information on a virtual object, the information on a teach point, and the information on an operation program by selecting a corresponding one of the tabs 4021, 4022, and 4023. In the example of FIG 6, the tab 4021 for inputting the information on a virtual object is provided with a name of "object setting". In addition, in the example of FIG 6, the tab 4022 for inputting the information on a teach point is provided with a name of "teach-point setting". In addition, in the example of FIG 6, the tab 4023 for inputting the information on an operation program is provided with a name of "program creation".

If the button 415 of the list display portion 401 is selected by a user, boxes 421 to 425 are displayed in the setting display portion 402 indicated by the "object setting" tab 4021. The boxes 421 to 425 can be used for a user to input setting information. The box 421 can be used to input the information on an object name. The box 422 can be used to input the information on a position and posture of an object relative to a parent object. The box 423 can be used to input the information on a mass. The box 424 can be used to input the information on a position of the center of gravity. The box 425 is provided with a name of "3D model", and can be used to input the name of a 3D-model data file created in advance by using a CAD software or the like.

In the setting display portion 402 indicated by the "object setting" tab 4021, a button 426 provided with a name of "fix" is displayed. If the button 426 provided with the name of "fix" is selected, the current set value is overwritten, and the position and 3D-model information of the object are updated in the 3D display portion 403.

In addition, in the setting display portion 402 indicated by the "object setting" tab 4021, a button 427 provided with a name of "cancel" and a button 428 provided with a name of "detection-target setting" are displayed. If the button 427 is selected, the CPU 311 cancels the editing that has been performed by a user. If the button 428 is selected, the image of the setting display portion 402 changes to an image in which detection targets are to be set. The detection targets are objects on which contact detection is performed for a virtual object with an object name specified in the box 421, which is disposed in the setting display portion 402 indicated by the tab 4021. Note that the detection targets are virtual objects. In addition, contacting an object means interfering with the object.

In Step S200, the CPU 311 accepts the information on a virtual object that is set by a user. The user can input the information to the CPU 311 by writing the information in the boxes 421 to 425 corresponding to the tab 4021, by operating the keyboard 303 and the mouse 304.

In the example of the first embodiment, the virtual objects are the virtual robot 100A, the virtual workpieces W11A to W14A, W21A, and W22A, and the virtual wall 50A. The CPU 311 displays an image in which the three-dimensional virtual space R is visualized, on the 3D display portion 403. Thus, a user can check a virtual object that has been set, as visual information.

In the example of FIG 6, a name of "Robot1_Base" is assigned with the information on the virtual base 110A. A name of "Robot1_Joint1" is assigned with the information on the virtual link 111A that includes the joint J1A. A name of "Robot1_Joint2" is assigned with the information on the virtual link 112A that includes the joint J2A. A name of "Robot1_Joint3" is assigned with the information on the virtual link 113A that includes the joint J3A. A name of "Robot1_Joint4" is assigned with the information on the virtual link 114A that includes the joint J4A. A name of "Robot1_Joint5" is assigned with the information on the virtual link 115A that includes the joint J5A. A name of "Robot1_Joint6" is assigned with the information on the virtual link 116A that includes the joint J6A. A name of "Robot1_Hand" is assigned with the information on the virtual robot hand 102A. A name of "TCP1" is assigned with the information on the tool center point of the virtual robot 100A.

In the example of FIG 6, a name of "Part1" is assigned with the information on the virtual workpiece W11A. A name of "Part2" is assigned with the information on the virtual workpiece W12A. A name of "Part3" is assigned with the information on the virtual workpiece W13A. A name of "Part4" is assigned with the information on the virtual workpiece W14A. A name of "Box1" is assigned with the information on the virtual workpiece W21A. A name of "Box2" is assigned with the information on the virtual workpiece W22A. A name of "Wall1" is assigned with the information on the virtual wall 50A. Note that these names can be set freely by a user.

The information in the boxes 421 to 424 is set for each of the plurality of portions of the virtual robot 100A, the virtual workpieces W11A to W14A, W21A, and W22A, and the virtual wall 50A.

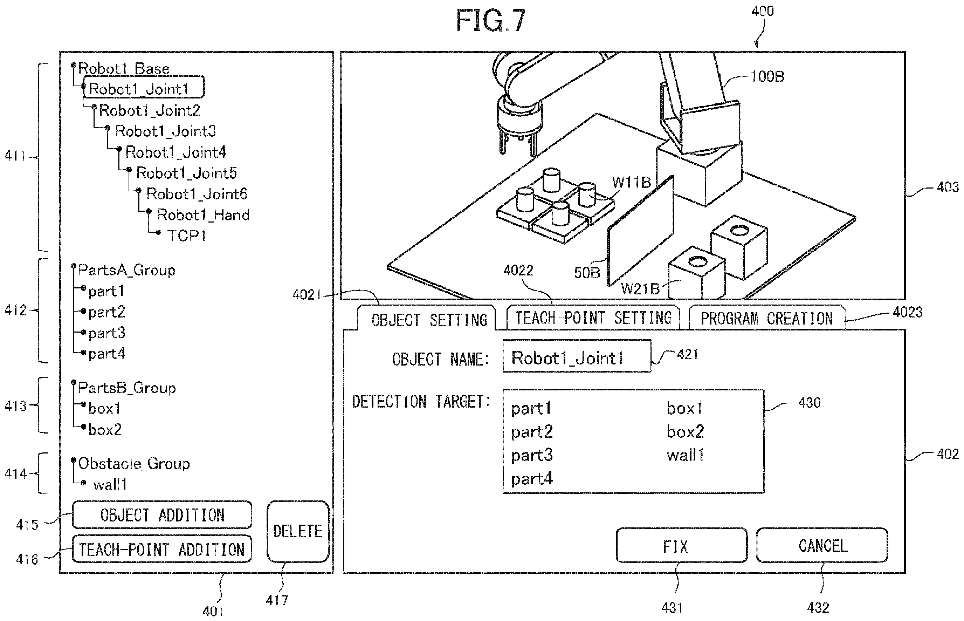

If the tab 4021 is selected, and the button 428 provided with the name of "detection-target setting" is selected when a user edits the information on the virtual link 111A, which corresponds to the name of "Robot1_Joint1", the CPU 311 changes the image 400 to the image 400 illustrated in FIG 7. FIG 7 is a diagram illustrating one example of display images 400 of the first embodiment, displayed on the display 302. Thus, if the tab 4021 is selected, and the button 428 is selected, the display screen changes to the display screen in which the detection targets for the virtual link 111A, which corresponds to the name of "Robot1_Joint1", are set.

In the setting display portion 402 indicated by the tab 4021, the box 421, a box 430 used for a user to specify a detection target, a button 431 provided with a name of "fix", and a button 432 provided with a name of "cancel" are displayed. If a user writes a name of a detection-target virtual object in the box 430 and selects the button 431 provided with the name of "fix", the CPU 311 accepts the setting for the detection-target virtual object, which is set by a user, for the virtual link 111A. That is, the CPU 311 sets a virtual object that corresponds to a name displayed in the box 430, as a detection target for a virtual object that corresponds to a name displayed in the box 421. In the example of FIG 7, the virtual workpieces W11A to W14A, W21, and W22, and the virtual wall 50A are set as detection targets for the virtual link 111A, which is provided with the name of "Robot1_Joint1". If the button 432, which is provided with the name of "cancel", is selected by a user, the CPU 311 cancels the editing that has been performed by the user.

The detection target is set manually by a user for each of the plurality of portions of the virtual robot 100A. That is, the CPU 311 accepts the setting, performed by a user, for each of the plurality of portions of the virtual robot 100A, that is, for each of the virtual base 110A, the plurality of virtual links 111A to 116A, and the virtual robot hand 102A. In addition, the CPU 311 automatically sets detection targets for each of the virtual workpieces W11A to W14A, W21A, and W22A, and the virtual wall 50A, based on the detection targets that have been set for each of the plurality of portions of the virtual robot 100A. For example, if the virtual workpiece W11A is set as a detection target for the virtual robot hand 102A, the virtual robot hand 102A is automatically set as a detection target for the virtual workpiece W11A.

Preferably, virtual objects that have been set are displayed in the 3D display portion 403, as 3D models. In the 3D display portion 403, a robot model 100B that corresponds to the virtual robot 100A, a workpiece model W11B that corresponds to the virtual workpiece W11A, a wall model 50B that corresponds to the virtual wall 50A, and a workpiece model W21B that corresponds to the virtual workpiece W21A are also displayed.

Note that in a stage in which detection targets have been set for each of the plurality of portions of the virtual robot 100A, if any portion is in contact with a detection target, it is preferable to notify a user of the contact by changing the color of the 3D model of the portion and the detection target in the 3D display portion 403.

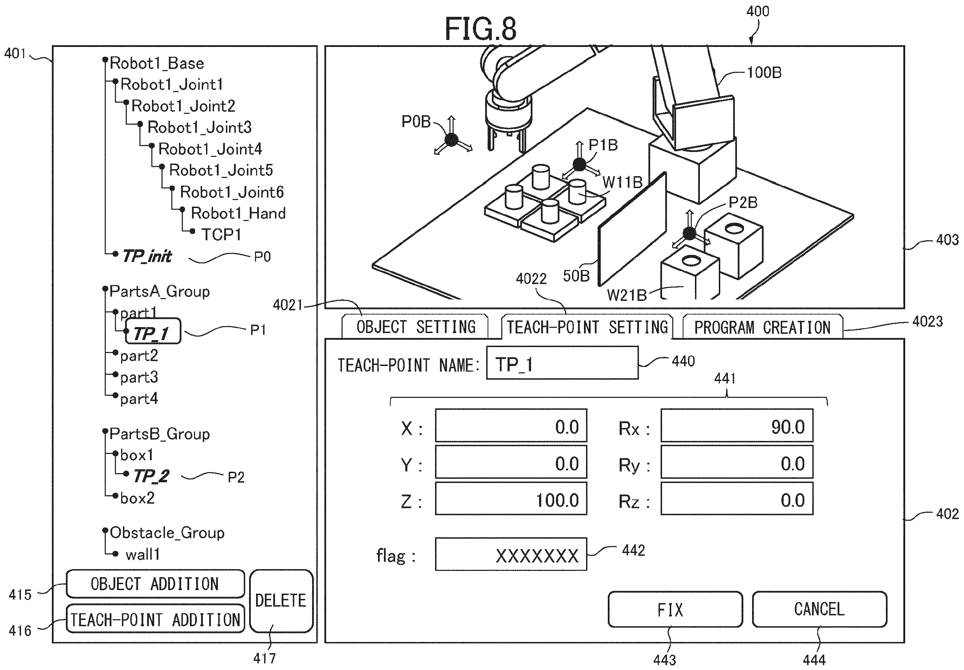

In Step S300, the CPU 311 accepts the setting of a teach point that has been inputted by a user. The teach point is created after the button 416, which is provided with the name of "teach-point addition", is selected by a user in the list display portion 401. The teach point is a target position and posture of the tool center point. FIG 8 is a diagram illustrating one example of display images 400 of the first embodiment, displayed on the display 302. For example, teach points P0, P1, and P2 are created by a user in the list display portion 401. The information on each of the teach points P0, P1, and P2 can be set and edited after the tab 4022 is selected by a user.

In the example of FIG 8, the teach point P0 indicates an initial position of the virtual robot 100A, and is provided with a name of "TP_init". The teach point P1 is a first teach point. The teach point P1 indicates a position at which the virtual workpiece W11A is held, and is provided with a name of "TP_1". The teach point P2 is a second teach point. The teach point P2 indicates a position which is above the virtual workpiece W21A, and at which the virtual workpiece W11A is assembled to the virtual workpiece W21A. The teach point P2 is provided with a name of "TP_2". Note that the names of teach points can be set freely by a user.

Preferably, the teach points P0, P1, and P2 are also changed automatically if parent objects are changed in position and posture. That is, the teach points P0, P1, and P2 are also managed in a hierarchical structure, so that the change of design can be made easier.

If a user selects the name of a teach point in the list display portion 401, the user can edit the information on the teach point corresponding to the selected name, in the setting display portion 402 indicated by the tab 4022. In the setting display portion 402 indicated by the tab 4022, a box 440 and a box 441 are displayed. In the box 440, the name of a teach point is displayed. In the box 441, the information on the position and posture of a teach point that corresponds to the name displayed in the box 440 can be written. In addition, in the setting display portion 402 indicated by the tab 4022, a box 442 in which the information on a posture flag can be written is displayed. The posture flag indicates a solution adopted when a plurality of solutions exists in the calculation based on inverse kinematics of the virtual robot 100A. In addition, in the setting display portion 402 indicated by the tab 4022, a button 443 provided with a name of "fix" and a button 444 provided with a name of "cancel" are displayed.

In the example of FIG 8, the name of "TP_1" of the teach point P1 is selected in the list display portion 401, and the information on the teach point P1, which corresponds to the name of "TP_1", can be edited in the setting display portion 402 indicated by the tab 4022.

If a user writes the information on the position and posture of the teach point in the box 441, and selects the button 443 provided with the name of "fix", the CPU 311 accepts the setting on the teach point, performed by the user. If the button 444, which is provided with the name of "cancel", is selected by a user, the CPU 311 cancels the editing that has been performed by the user.

Preferably, teach points that have been set are displayed in the 3D display portion 403, as 3D teach-point models. In the 3D display portion 403, teach-point models P0B, P1B, and P2B that correspond to the teach points P0, P1, and P2 are displayed. In each of the teach-point models P0B to P2B, a dot represents a position, and three arrows represent a posture.

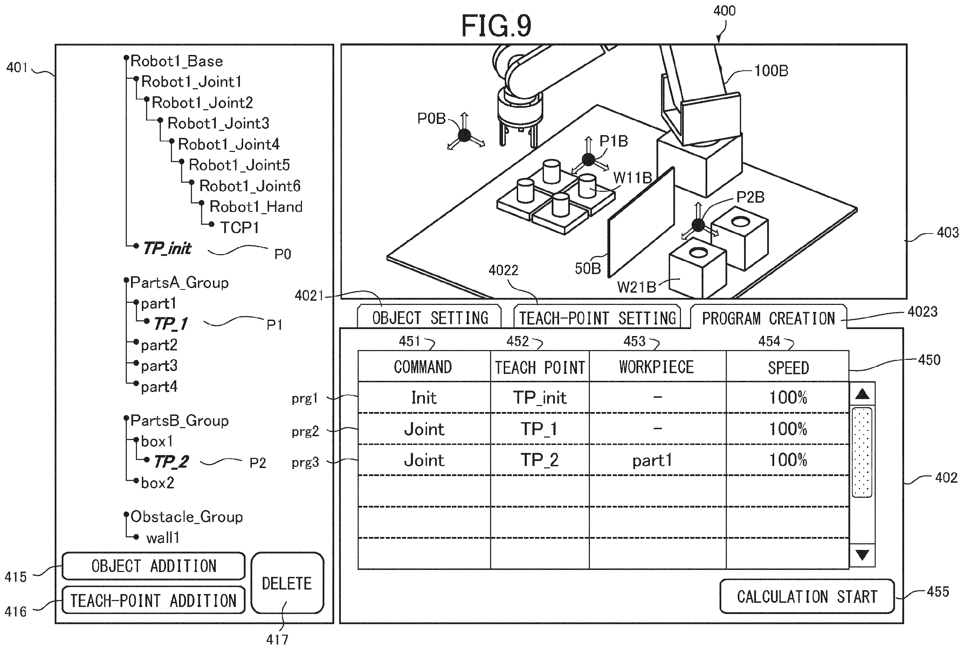

In Step S400, the CPU 311 accepts the setting of an operation program, which is inputted by a user. FIG 9 is a diagram illustrating one example of display images 400 of the first embodiment, displayed on the display 302.

In the setting display portion 402 indicated by the tab 4023, which is provided with the name of "program creation", a table 450 used for setting the operation program and a button 455 provided with a name of "calculation start" are displayed. The table 450 includes a plurality of columns 451, 452, 453, and 454. The column 451 is a command column that specifies operations of the virtual robot 100A. The column 452 is a teach point column that specifies teach points. The column 453 is a column that specifies a workpiece to be conveyed. The column 454 is a column that specifies a speed. If the button 455 of "calculation start" is selected by a user, the CPU 311 simulates the operation of the virtual robot 100A, sequentially from the first line.

In the column 451, a plurality of types of commands can be specified. The types of commands can be increased in accordance of use. In the example of FIG 9, a command "Init" and a command "Joint" are specified. The command "Init" causes a specified teach point to be the initial position of the virtual robot. The command "Joint" causes the virtual robot to move to a specified teach point, by using the joint interpolation.

Next, the description will be made for a case where the teach point P0 is set as a start point, then the virtual robot 100A is moved from the teach point P0 to the teach point P1, then the virtual workpiece W11A is linked with the virtual robot 100A at the teach point P1, and then the virtual robot 100A is moved from the teach point P1 to the teach point P2. Thus, the robot 100 conveys the workpiece W11 to a position above the workpiece W21 and assembles the workpiece W11 to the workpiece W21 by moving from the teach point P0, which is set as a start point, to the teach point P1, then holding the workpiece W11 at the teach point P1, and then moving from the teach point P1 to the teach point P2.

Note that linking the virtual workpiece W11A with the virtual robot 100A means causing the virtual robot 100A to hold the virtual workpiece W11A in simulation. In the first embodiment, linking the virtual workpiece W11A with the virtual robot 100A means causing the virtual robot hand 102A, which is one example of a predetermined portion of the virtual robot 100A, to hold the virtual workpiece W11A in simulation. Thus, if the virtual workpiece W11A is linked with the virtual robot 100A, the position and posture of the virtual workpiece W11A relative to the virtual robot hand 102A is kept even when the posture of the virtual robot 100A changes. In the first embodiment, the CPU 311 links the virtual workpiece W11A with the virtual robot 100A by keeping the relative position and posture between the virtual robot hand 102A and the virtual workpiece W11A. In this manner, the state where the virtual robot hand 102A is holding the virtual workpiece W11A can be achieved in simulation.

In the table 450, these operations are expressed in operation programs prg1 to prg3 written in a plurality of lines. The operation program prg1 sets the teach point P0 as a start point, by using the command "Init" and the name "TP_init" of the teach point P0. The following operation program prg2 moves the virtual robot 100A from the teach point P0 to the teach point P1 by using the joint interpolation, and using the command "Joint" and the name "TP_1" of the teach point P1. The following operation program prg3 links the virtual workpiece W11A with the virtual robot 100A at the teach point P1, by using the name "part1" of the workpiece W11A. In addition, the operation program prg3 moves the virtual robot 100A from the teach point P1 to the teach point P2 by using the joint interpolation, and using the command "Joint" and the name "TP_2" of the teach point P2. In this manner, the operation programs are written and set in the table 450 by a user.

By using the above-described setting information, the CPU 311 can obtain the motion of the virtual robot 100A in a predetermined process. In the first embodiment, the CPU 311 determines the motion of the virtual robot 100A in the predetermined process. That is, the CPU 311 performs a search process for searching for the motion of the virtual robot 100A.

In the first embodiment, the CPU 311 simulates the behavior of the virtual robot 100A in the search process, in accordance with the operation programs that are set in the table 450. In addition, in an operation program in which an instruction is written for linking the virtual workpiece W11A with the virtual robot 100A, the CPU 311 simulates the behavior of the virtual robot 100A and the virtual workpiece W11A in the search process. In this manner, the CPU 311 automatically calculates the motion of the virtual robot 100A that allows the virtual robot 100A and the virtual workpiece W11A to avoid obstacles.

Hereinafter, the simulation performed by the CPU 311 when the "calculation start" button 455 is selected by a user will be described in detail. The description will be made for an example in which the virtual robot 100A conveys the virtual workpiece W11A to the virtual workpiece W21A, depending on the operation programs prg1 to prg3 written in the table 450 of FIG 9. The table 450 contains the operation programs prg1 to prg3 written in a plurality of lines (e.g., three lines). The CPU 311 performs the simulation for each line in a sequential manner.

If the "calculation start" button 455 is selected by a user, the CPU 311 executes the steps S500 to S1000.

In Step S500, the CPU 311 reads the operation program prg1 written in the first line of the table 450, and selects whether or not to link the virtual workpiece W11A with the virtual robot 100A. Since the virtual workpiece W11A is not specified in the column 453 in the operation program prg1, the CPU 311 selects that the CPU 311 does not link the virtual workpiece W11A with the virtual robot 100A (S500: NO). The CPU 311 executes the command "Init", and sets the teach point P0 provided with the name of "TP_init", as a start point.

In Step S600, the CPU 311 sets a teach point specified in the previous operation program, as a start point; sets a teach point specified in the current operation program, as an end point; and searches for a motion of the virtual robot 100A performed from the start point to the end point. In the operation program prg1, since the previous operation program does not exist, the CPU 311 performs no operation in Step S600 and proceeds to the next step S700.

In Step S700, the CPU 311 determines whether the simulation has been performed for all the operation programs. In this case, since the operation program prg2 written in the second line exists (S700: NO), the CPU 311 returns to Step S500.

In Step S500, the CPU 311 reads the operation program prg2 written in the second line, and selects whether or not to link the virtual workpiece W11A with the virtual robot 100A. Since the virtual workpiece W11A is not specified in the column 453 in the operation program prg2, the CPU 311 selects that the CPU 311 does not link the virtual workpiece W11A with the virtual robot 100A (S500: NO).

In Step S600, the CPU 311 searches for a motion of the virtual robot 100A which is performed from the teach point P0 specified in the previous operation program prg1 to the teach point P1 specified in the current operation program prg2, and in which the virtual robot 100A does not contact obstacles. The obstacles are set in Step S200, as detection targets.

In the search process of Step S600, the CPU 311 calculates intermediate teach points interposed between the teach point P0 and the teach point P1, for achieving the motion of the virtual robot 100A in which each portion of the virtual robot 100A does not contact the obstacles. That is, the CPU 311 determines the intermediate teach points between the teach point P0 and the teach point P1, along which the virtual robot 100A moves from the teach point P0 to the teach point P1 so as not to contact the obstacles. Preferably, a search algorithm, such as rapidly exploring random tree: RRT, is used for calculating the intermediate teach points. By using the RRT, the motion of the virtual robot 100A, that is, the intermediate teach points are calculated so that each portion of the virtual robot 100A does not contact the corresponding detection targets, which are set for the portion.

In Step S700, the CPU 311 determines whether the simulation has been performed for all the operation programs. In this case, since the operation program prg3 written in the third line exists (S700: NO), the CPU 311 returns to Step S500.

In Step S500, the CPU 311 reads the operation program prg3 written in the third line, and selects whether or not to link the virtual workpiece W11A with the virtual robot 100A. In the operation program prg3, the virtual workpiece W11A is specified in the column 453. Thus, the CPU 311 selects to link the virtual workpiece W11A with the virtual robot 100A (S500: YES).

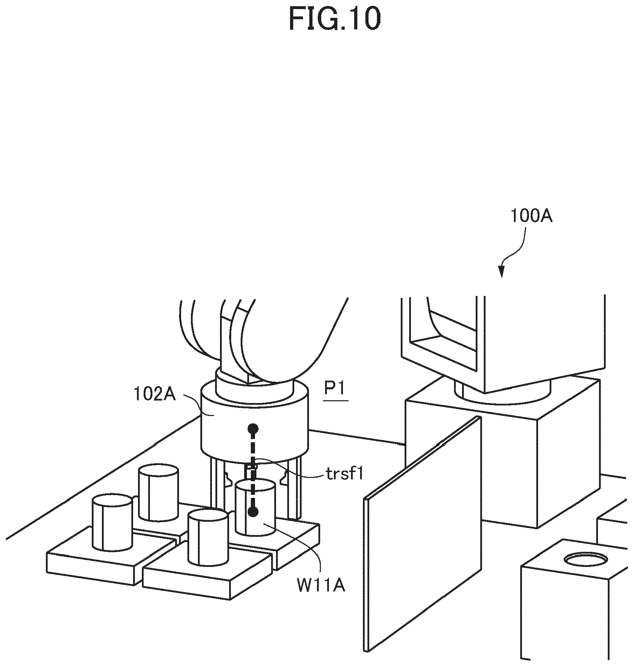

In the operation program prg3, the start point at which the virtual robot 100A starts the conveyance operation is the teach point P1, and the end point is the teach point P2. In Step S800, the CPU 311 links the virtual workpiece W11A with the virtual robot hand 102A. FIG 10 is a schematic diagram for illustrating the calculation for linking the virtual workpiece W11A with the virtual robot hand 102A in the first embodiment. In Step S800, the CPU 311 calculates a relative positional relationship trsfl between the virtual robot hand 102A and the virtual workpiece W11A in a state where the posture of the virtual robot 100A is the teach point P1. That is, for calculating the positional relationship trsfl, the CPU 311 sets the posture of the virtual robot 100A so that the position and posture of the tool center point associated with the virtual robot 100A is the teach point P1. The CPU 311 stores the information on the calculated positional relationship trsfl, in the RAM 313 or the HDD 314, for example. Note that although the information on the position and posture of the virtual robot hand 102A and the information on the position and posture of the virtual workpiece W11A as the relative positional relationship trsfl between the virtual robot hand 102A and the virtual workpiece W11A is stored in the present embodiment, only the information on the position of the virtual robot hand 102A and the information on the position of the virtual workpiece W11A may be stored.

If the virtual workpiece W11A is not linked with the virtual robot 100A, the virtual workpiece W11A is an obstacle that the virtual robot 100A is required not to contact. Thus, in the RRT simulation, the CPU 311 performs calculation for determining whether the virtual robot 100A contacts the virtual workpiece W11A. Note that in the present embodiment, calculating means detecting.

In contrast, if the virtual workpiece W11A is linked with the virtual robot 100A, the CPU 311 does not perform the calculation in the RRT simulation, which is performed for determining whether the virtual robot hand 102A contacts the virtual workpiece W11A. In this case, however, the CPU 311 performs calculation in the RRT simulation, for determining whether the virtual workpiece W11A contacts another portion of the virtual robot 100A other than the virtual robot hand 102, and virtual objects around the virtual robot 100A.

Thus, in Step S900, the CPU 311 sets detection targets for the virtual workpiece W11A linked with the virtual robot hand 102A, based on the detection targets that are set for the virtual robot hand 102A.

In the first embodiment, the detection targets for the virtual workpiece W11A have already been set in Step S200. Thus, in the first embodiment, the CPU 311 changes the detection targets for the virtual workpiece W11A linked with the virtual robot hand 102A, based on the detection targets that are set for the virtual robot hand 102A. For example, the CPU 311 changes the detection targets that have already been set for the virtual workpiece W11A, to detection targets obtained by removing a detection target "part1" from the detection targets that are set for the virtual robot hand 102A.

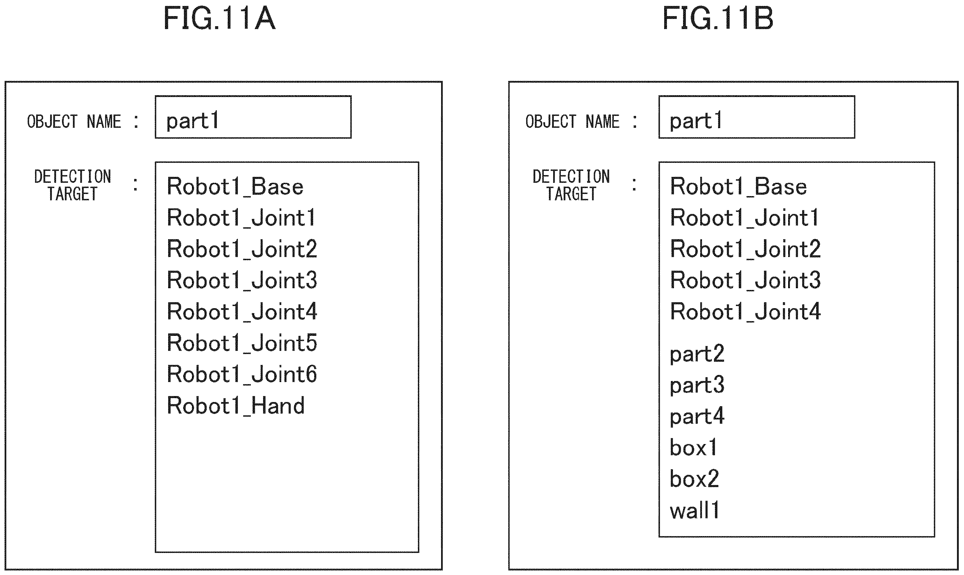

FIGS. 11A and 11B are diagrams each illustrating one example of lists of detection targets that are set for the virtual workpiece W11A in the first embodiment. FIG 11A illustrates a list obtained before the setting is changed, and FIG 11B illustrates a list obtained after the setting is changed. In the simulation in the operation programs prg1 and prg2, the detection targets for the virtual workpiece W11A are the portions of the virtual robot 100A, as illustrated in FIG 11A. On the other hand, in the simulation in the operation program prg3, the detection targets for the virtual workpiece W11A are changed as illustrated in FIG 11B, because the virtual workpiece W11A is linked with the virtual robot 100A. The list illustrated in FIG 11B is obtained by removing the virtual workpiece W11A from the detection targets that are set for the virtual robot hand 102A.

In the search process of Step S600, the CPU 311 links the virtual workpiece W11A with the virtual robot 100A, and searches for the motion of the virtual robot 100A in which the virtual robot 100A and the virtual workpiece W11A do not contact the detection targets. In this case, the CPU 311 searches for the motion of the virtual robot 100A by using the RRT search algorithm, as in the case where the virtual workpiece W11A is not linked with the virtual robot 100A.

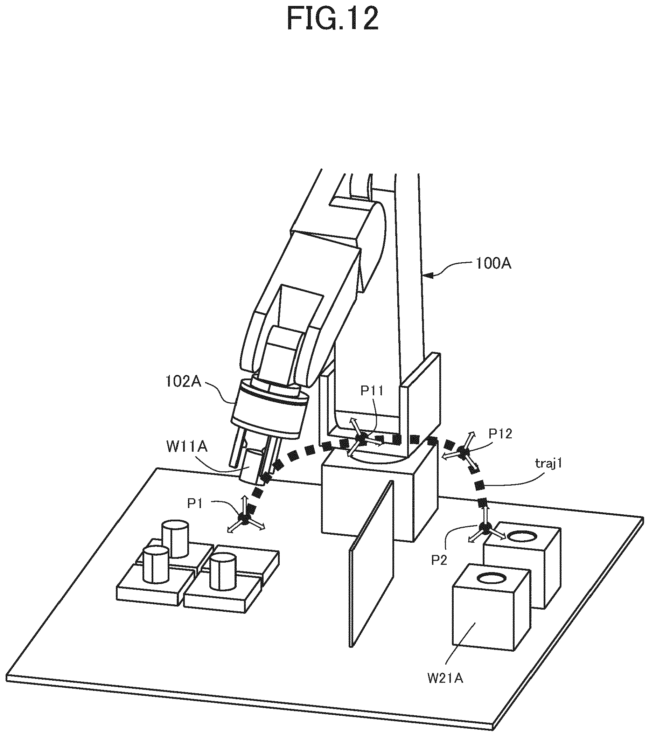

FIG 12 is a diagram illustrating one example of motion of the virtual robot 100A, determined in the search process in the first embodiment. The CPU 311 determines intermediate teach points P11 and P12 between the teach point P1 and the teach point P2. In FIG 12, the motion of the virtual robot 100A calculated by using the four teach points P1, P11, P12, and P2 is indicated by a trajectory traj1, which is indicated by a dotted line.

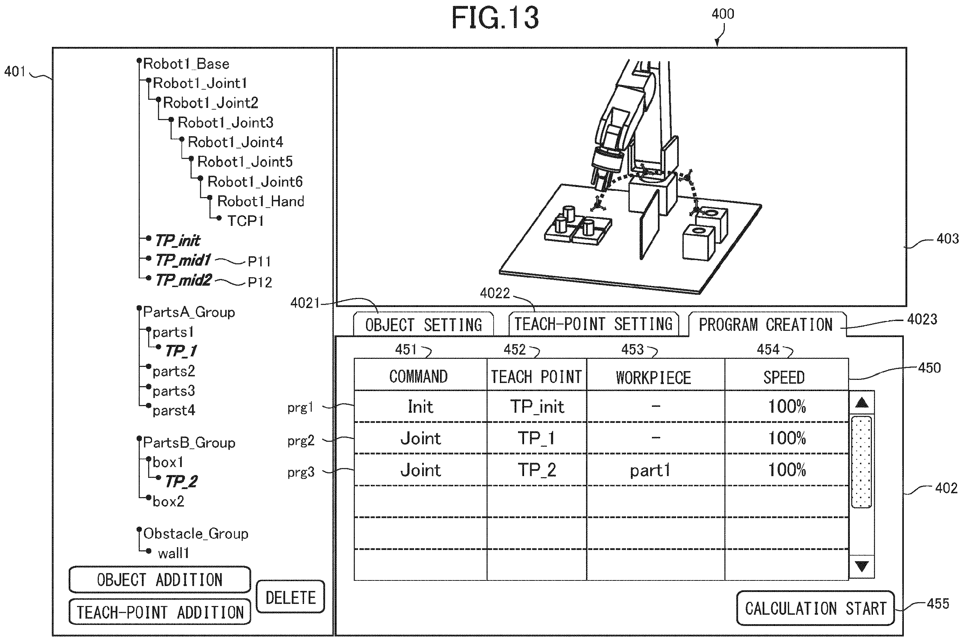

FIG 13 is a diagram illustrating one example of display images 400 of the first embodiment, displayed on the display 302. In the list display portion 401 illustrated in FIG 13, the intermediate teach point P11 provided with a name of "TP_mid1" and the intermediate teach point P12 provided with a name of "TP_mid2" are added. In addition, in the 3D display portion 403, the four teach points and the trajectory that connects the four teach points are schematically illustrated. Thus, by using the added intermediate teach points P11 and P12, a user can create a new operation program, or can modify the teach points.

In Step S700, the CPU 311 determines whether the simulation has been performed for all the operation programs. In this case, since the operation program prg3 written in the third line is the last operation program, the simulation has been performed for all the operation programs (S700: YES). Thus, the CPU 311 proceeds to Step S1000.

In Step S1000, the CPU 311 outputs the teach data that contains the information on the teach points P0, P1, P11, P12, and P2, to the control apparatus 200. Since the teach data created through a series of operations in this manner is outputted to the control apparatus 200 that controls the robot 100, the control apparatus 200 can move the real robot 100, depending on the teach data created in the offline teaching.

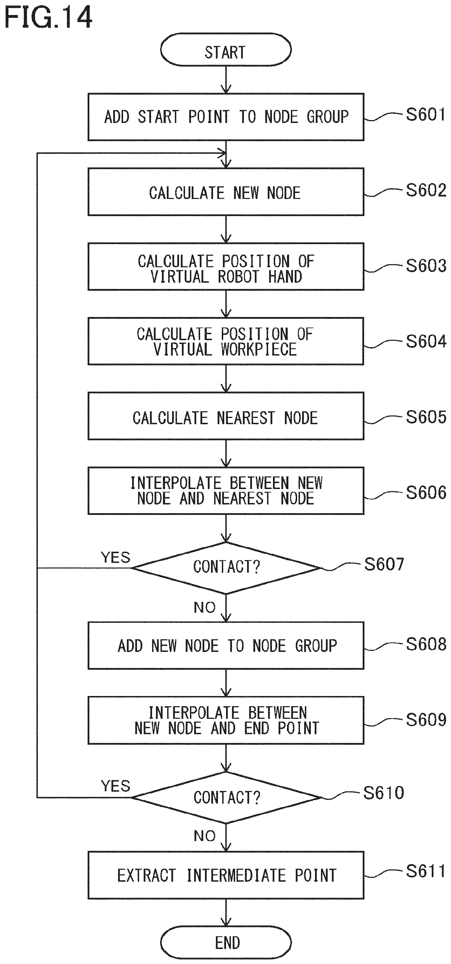

FIG 14 is a flowchart illustrating one example of the RRT-algorithm search process, which is performed in Step S600. The flowchart of FIG 14 illustrates one example of the search process for a case where the virtual workpiece W11A is specified and linked with the virtual robot 100A in the operation program.

In Step S601, the CPU 311 adds a start point to a node group. Note that a node is a combination of values of all the joints J1A to J6A of the virtual robot 100A and a node group is a group of nodes. At first, the node group has no nodes.

In Step S602, the CPU 311 determines a new node at random. Specifically, each of the joints J1A to J6A of the virtual robot 100A has a range from a lower limit to an upper limit in which the joint can move, and the CPU 311 determines a random value within the range for each joint.

In Step S603, the CPU 311 performs calculation based on forward kinematics, and determines the position of each of the joints J1A to J6A and the position of the virtual robot hand 102A, by using the value of each of the joints J1A to J6A included in the new node.

In Step S604, the CPU 311 determines the position of the virtual workpiece W11A by using the relative positional relationship trsfl between the virtual workpiece W11A and the virtual robot hand 102A, which is calculated in Step S800.

In Step S605, the CPU 311 determines a node, from the node group, that is nearest to the new node. Note that the difference between the values of the joints of the new node and the values of the joints of the nearest node is minimum in the node group.

In Step S606, the CPU 311 interpolates between the new node and the nearest node at predetermined or freely-selected intervals. The method of the interpolation may be a predetermined method, such as the joint interpolation. In addition, when the interpolation is performed, the information on the mass and the center of gravity, which are set in Step S200 of FIG 5, are also used.

In Step S607, the CPU 311 determines whether the plurality of portions of the virtual robot 100A and the virtual workpiece W11A linked with the virtual robot 100A contact the respective detection targets at each position, which is determined by performing the interpolation. The detection targets for each portion of the virtual robot 100A are set in Step S200 of FIG 5, and the detection targets for the virtual workpiece W11A is set in Step S900 of FIG 5 again.

If at least one of the plurality of portions of the virtual robot 100A and of the virtual workpiece W11A contacts a detection target (S607: YES), then the CPU 311 discards the data of the new node, returns to Step S602, and determines a new node again.

If the plurality of portions of the virtual robot 100A and the virtual workpiece W11A do not contact the detection targets (S607: NO), then the CPU 311 adds the new node to the node group in Step S608. When the CPU 311 adds a new node to the node group, the CPU 311 also records the information on the nearest node corresponding to the new node.

In Step S609, the CPU 311 interpolates between the new node and the end point at predetermined or freely-selected intervals. The method of the interpolation may be a predetermined method, such as the joint interpolation. In addition, when the interpolation is performed, the information on the mass and the center of gravity, which are set in Step S200, are also used.

In Step S610, the CPU 311 determines whether the plurality of portions of the virtual robot 100A and the virtual workpiece W11A linked with the virtual robot 100A contact the respective detection targets at each position, which is determined by performing the interpolation. The detection targets for each portion of the virtual robot 100A are set in Step S200 of FIG 5, and the detection targets for the virtual workpiece W11A is set in Step S900 of FIG 5 again.

If at least one of the plurality of portions of the virtual robot 100A and of the virtual workpiece W11A contacts a detection target (S610: YES), then the CPU 311 returns to Step S602, and determines a new node again.

If the plurality of portions of the virtual robot 100A and the virtual workpiece W11A do not contact the detection targets (S610: NO), then the CPU 311 proceeds to Step S611.

In Step S611, the CPU 311 extracts intermediate points from the node group. The intermediate points are extracted by tracing the nearest nodes sequentially in the order from the last new node added. The above-described steps S601 to S611 are the search process performed for the case where the virtual workpiece W11A is linked with the virtual robot 100A.

Note that in a case where the virtual workpiece W11A is not linked with the virtual robot 100A, Step S604 is not performed in the search process. In addition, in the steps S607 and S610, the CPU 311 determines whether the plurality of portions of the virtual robot 100A contact the respective detection targets at each position, which is determined by performing the interpolation. The detection targets for each portion of the virtual robot 100A are set in Step S200 of FIG 5.

The CPU 311 may display the virtual robot 100A and the virtual workpiece W11A, whose states are obtained in the above-described steps S601 to S611, on the 3D display portion 403, in simulation, as a still or moving image.

As described above, in the first embodiment, the CPU 311 links the virtual workpiece W11A with the virtual robot 100A, and automatically determines a motion of the virtual robot 100A in which the virtual robot 100A and the virtual workpiece W11A do not contact obstacles. Thus, a user can easily perform the simulation work even if the user has no expertise. In addition, since a user can obtain a motion of the virtual robot 100A, in which the virtual robot 100A and the virtual workpiece W11A do not contact obstacles, without visually checking the motion of the virtual robot 100A one by one, the user workability for the simulation can be improved. In addition, the teaching for the robot 100 can be easily performed, based on the simulation work.

In addition, a user has only to set the teach point P1 that is a start point of the virtual robot 100A, the teach point P2 that is an end point of the virtual robot 100A, and the virtual workpiece W11A that is to be conveyed. By using the setting, the CPU 311 automatically determines a motion of the virtual robot 100A in which the virtual robot 100A and the virtual workpiece W11A do not contact obstacles. Thus, a user can easily perform the simulation work even if the user has no expertise. In addition, since a user can obtain a motion of the virtual robot 100A, in which the virtual robot 100A and the virtual workpiece W11A do not contact obstacles, without visually checking the motion of the virtual robot 100A one by one, the user workability for the simulation can be improved. In addition, the teaching for the robot 100 can be easily performed, based on the simulation work.

In addition, also for the motion of the virtual robot 100A that is not linked with the virtual workpiece W11A, the CPU 311 automatically determines a motion of the virtual robot 100A in which the virtual robot 100A does not contact obstacles. Thus, a user can easily perform the simulation work even if the user has no expertise. In addition, since a user can obtain a motion of the virtual robot 100A, in which the virtual robot 100A and the virtual workpiece W11A do not contact obstacles, without visually checking the motion of the virtual robot 100A one by one, the user workability for the simulation can be improved. In addition, the teaching for the robot 100 can be easily performed, based on the simulation work.

### Second Embodiment

Next, a second embodiment will be described. Hereinafter, the description will be made with reference to the accompanying drawings, for hardware and a configuration of a control system that are different from those of the first embodiment. Since a component identical to a component of the first embodiment has the same configuration and effect as those of the component of the first embodiment, the detailed description thereof will be omitted.

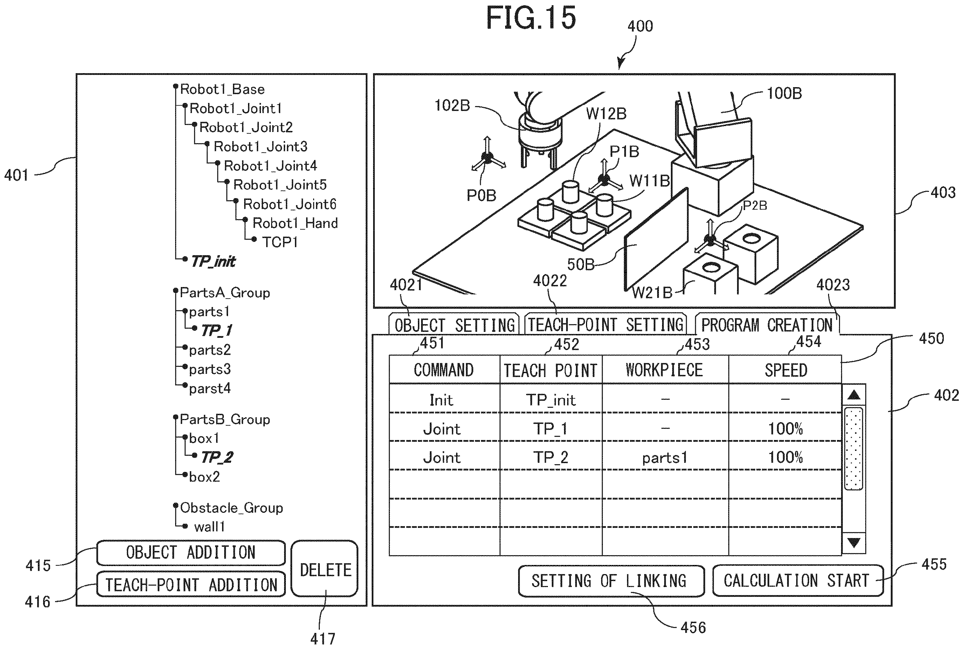

FIG 15 is a diagram illustrating one example of display images 400 of the second embodiment, displayed on the display 302. As illustrated in FIG 15, the second embodiment differs from the first embodiment in that a button 456 provided with a name of "setting of linking" is displayed. In the above-described first embodiment, the relative positional relationship trsfl between the virtual robot hand 102A and the virtual workpiece W11A, which is a linking condition between the virtual robot hand 102A and the virtual workpiece W11A, is calculated by the CPU 311. In the second embodiment, however, the relative positional relationship trsfl, which is the linking condition, is set by a user. A robot hand model 102B displayed in the 3D display portion 403 corresponds to the virtual robot hand 102A, and a workpiece model W11B displayed in the 3D display portion 403 corresponds to the virtual workpiece W11A. Hereinafter, the description will be made for a case where the virtual robot hand 102A and the virtual workpiece W11A are used.

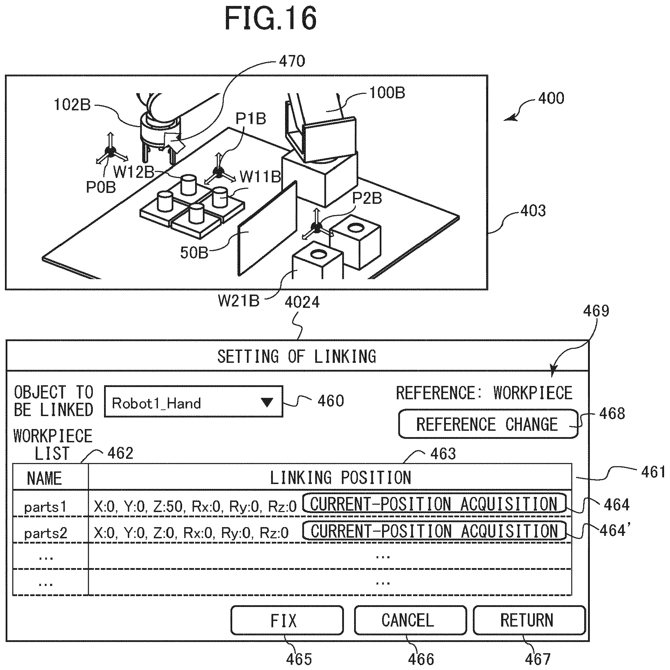

FIG 16 is a diagram illustrating one example of display images 400 displayed on the display 302 when a user clicks the button 456 illustrated in FIG 15. When a user clicks the button 456 illustrated in FIG 15, a tab 4024 that is used for setting a linking condition illustrated in FIG 16, and the 3D display portion 403 that displays the virtual space R are displayed. The tab 4024 is provided with a name of "setting of linking". In the display screen indicated by the tab 4024, a box 460, a table 461, columns 462 and 463, and buttons 464, 465, 466, and 467 are displayed. These components will be described in detail below.

The box 460 is a setting box used for setting an object to be linked, for which a linking condition is set. In FIG 16, the virtual robot hand 102A is set in the box 460. Note that although the virtual robot hand 102A is described in the second embodiment, as a predetermined portion of the virtual robot 100A that is to be linked, the predetermined portion is not limited to the virtual robot hand 102A. For example, a predetermined link of the virtual robot 100A may be set as an object to be linked.

The table 461 is a table via which the information on a virtual workpiece to be linked with the object, and a parameter related to the relative positional relationship trsfl are inputted for setting the linking condition. The column 462 is a column in which a virtual workpiece to be linked with the object is set. In FIG 16, a workpiece name corresponding to the virtual workpiece W11A is displayed in the column 462, and another name corresponding to another workpiece is also displayed in the column 462 in a sequential manner. The column 463 is a column via which a parameter related to the relative positional relationship trsfl between the virtual robot hand 102A and a virtual workpiece is inputted.

The parameter of the column 463 in FIG 16 represents a relative position and posture of the tool center point of the virtual robot hand 102A with respect to a freely-selected virtual point of the virtual workpiece W11A. The freely-selected virtual point is one example of a first position of the virtual workpiece W11A that is used in control, and the tool center point is one example of a second position of the virtual robot hand 102A that is used in control. That is, the parameter of the column 463 in FIG 16 means that the tool center point of the virtual robot hand 102A is separated from the freely-selected virtual point of the virtual workpiece W11A by 50 in the positive direction of Z axis. The value of 50 is a piece of information on distance that is set in the virtual space R, and the unit of the value may be millimeters or centimeters. If the values of Rx, Ry, and Rz are also specified, the posture of the tool center point of the virtual robot hand 102A with respect to the freely-selected virtual point of the virtual workpiece W11A can also be set. Thus, a user can easily perform the setting, not only for a case where the virtual workpiece W11A is held from directly above, but also for a case where the virtual workpiece W11A is held from the side.

The button 464 is a button for obtaining the position and posture of the tool center point of the virtual robot hand 102A (102B) with respect to the freely-selected virtual point of the virtual workpiece W11A (W11B), with respect to the virtual robot hand 102A(102B) and the virtual workpiece W11A (W11B) displayed in the 3D display portion, and displaying the obtained position and posture as parameters in column 463. Specifically, in a case where the setting performed by using parameters is troublesome, the virtual robot hand 102A (102B) displayed in the 3D display portion 403 is moved to a desired position by using a pointer 470 so that the virtual robot hand 102A (102B) takes a desired posture. Then, the button 464 is pressed. As a result, the position and posture of the tool center point of the virtual robot hand 102A (102B) with respect to the freely-selected virtual point of the virtual workpiece W11A (W11B) when the button 464 is pressed is obtained, and the obtained position and posture displayed as parameters in the column 463. With this operation, a user can intuitively set the relative positional relationship trsfl, which is a linking condition, while viewing the position and posture of the virtual robot hand 102A (102B) displayed in the 3D display portion 403. Note that if a button 464' is pressed, the position and posture of the tool center point of the virtual robot hand 102A (102B) with respect to a freely-selected virtual point of a virtual workpiece W21A (W21B) can be obtained, and set as a linking condition. The button 464 is displayed in a line associated with a corresponding virtual workpiece in the column 463.

Note that in the second embodiment, the positional relationship trsfl is set by obtaining the position of the tool center point of the virtual robot hand 102A (102B) with respect to the freely-selected virtual point of the virtual workpiece W11A (W11B). However, if a button 468 provided with a name of "reference change" is pressed, the reference for the positional relationship trsfl can be changed. In FIG 16, a "workpiece" is displayed in a reference displaying portion 469. In this case, if the button 468 is pressed, a "robot hand" is displayed in the reference displaying portion 469. If the robot hand is the reference, the position of the freely-selected virtual point of the virtual workpiece W11A (W11B) with respect to the tool center point of the virtual robot hand 102A (102B) is set as the positional relationship trsfl. In this case, the value in the Z axis is -50 in the column 463.

After the relative positional relationship trsfl is set as a linking condition for each workpiece, the linking condition is fixed by pressing the button 465 provided with a name of "fix". If the button 466 provided with a name of "cancel" is pressed, parameters in the column 463 are deleted. In the second embodiment, if the button 466 is pressed in a state where parameters are selected in the column 463, the selected parameters are deleted. However, if the button 466 is pressed, all parameters in the column 463 may be deleted. If the button 467 provided with a name of "return" is pressed, the image 400 illustrated in FIG 15 is displayed again.

### Modification

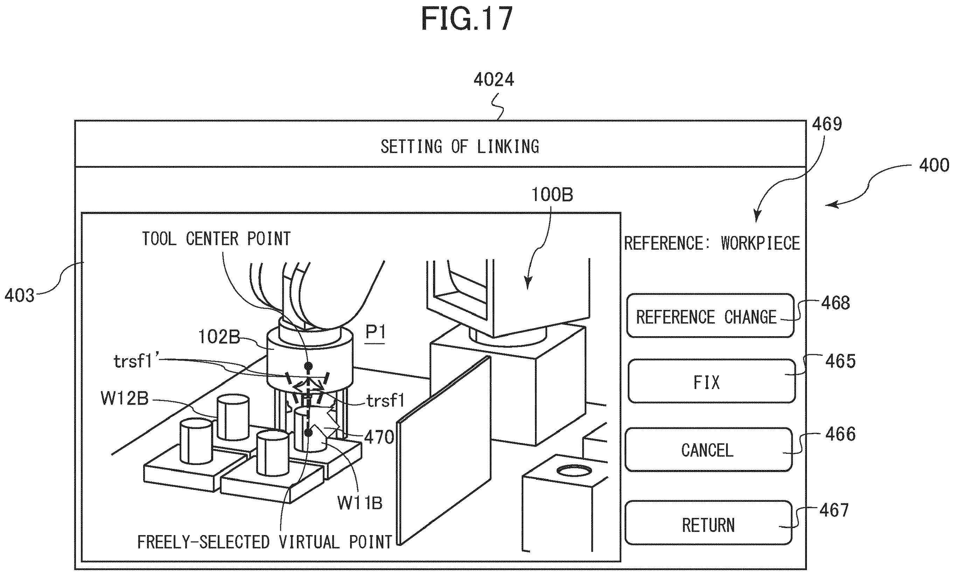

FIG 17 is a diagram illustrating a modification of the display screen indicated by the tab 4024, which is used for performing the setting of linking in the second embodiment. In the present modification, the 3D display portion 403 that displays the virtual space R is displayed in the display screen indicated by the tab 4024. In addition, the relative positional relationship trsfl that is a linking condition is set by performing drawing by using the pointer 470. Preferably, the drawing is performed by performing at least one of click, drag, and drop, by using the mouse 304. In the example of FIG 17, the positional relationship trsfl is drawn and set by a user clicking the tool center point of the virtual robot hand 102A (102B), then dragging the pointer to the virtual point of the virtual workpiece W11A (W11B) while keeping the click, and then dropping the pointer at the virtual point of the virtual workpiece W11A (W11B) by using the mouse 304. The CPU 311 displays the positional relationship trsfl, which is set by performing the drawing, in the 3D display portion 403 by using, for example, a model indicated by a broken line of FIG 17. In this state, the posture of the model, indicated by the broken line of FIG 17, can be changed by a user by using the pointer 470. If the posture of the model is changed by a user from the positional relationship trsfl to a positional relationship trsf1', the CPU 311 accepts the change of the positional relationship. Note that in the present modification, the model that represents the positional relationship trsfl is rotated by moving the tool center point of the virtual robot hand 102A (102B) with respect to the freely-selected virtual point of the virtual workpiece W11A (W11B). If the button 468 provided with the name of "reference change" is pressed, the reference for the positional relationship trsfl can be changed. In FIG 17, a "workpiece" is displayed in the reference displaying portion 469. In this case, if the button 468 is pressed, a "robot hand" is displayed in the reference displaying portion 469. If the robot hand is the reference and the model that represents the positional relationship trsfl is rotated, the freely-selected virtual point of the virtual workpiece W11A (W11B) moves with respect to the tool center point of the virtual robot hand 102A (102B).

In the present modification, the description has been made, as an example, for the setting of the virtual workpiece W11A (W11B). However, the virtual robot hand 102A (102B) may be positioned at a predetermined position in the vicinity of another virtual workpiece by using the pointer 470, and a user may set a linking condition for the other virtual workpiece by performing click, drag, and drop by using the pointer 470.

After a desired positional relationship trsfl is drawn, the positional relationship trsfl can be fixed as a linking condition, by pressing the button 465. If the button 466 is pressed, the position and posture, which is drawn in the virtual space R as a linking condition, is deleted. In the present modification, if the button 466 is pressed in a state where a position and posture is selected in the virtual space R, the selected position and posture is deleted. However, if the button 466 is pressed, all positions and postures in the virtual space R may be deleted. If a button 467 is pressed, the image 400 illustrated in FIG 15 is displayed again.

As described above, in the second embodiment and the modification thereof, the linking condition between the virtual robot hand 102A and the virtual workpiece W11A, and the linking condition between the virtual robot hand 102A and another virtual workpiece can be set easily. Thus, a user can easily set the linking condition, not only for a case where the virtual workpiece W11A is held from directly above, but also for a case where the virtual workpiece W11A is held from the side. Thus, a user can easily simulate the behavior of various robots and various workpieces, so that the user workability for the simulation can be improved. Thus, a user can easily perform the teaching for the robot 100, based on the simulation work. Note that the second embodiment or the modification thereof may be combined with the above-described first embodiment or a modification thereof, for achieving the information processing apparatus and the information processing method. In addition, the second embodiment described with reference to FIG 16 may be combined with the modification of the second embodiment described with reference to FIG 17, for achieving the information processing apparatus and the information processing method.

The present invention is not limited to the above-described embodiments, and may be variously modified within the technical concept of the present invention. In addition, the effects described in the embodiments are merely the most suitable effects produced by the present invention. Thus, the effects by the present invention are not limited to those described in the embodiments.

In the above-described embodiments, the description has been made for the case where the robot arm is a vertically articulated robot arm. However, the present disclosure is not limited to this. For example, the robot arm may be any one of various robot arms, such as a horizontally articulated robot arm, a parallel link robot arm, and a Cartesian coordinate robot arm In addition, the present disclosure may be applied for simulating an operation in which a workpiece is conveyed by a machine that can automatically perform expansion and contraction motion, bending and stretching motion, up-and-down motion, right-and-left motion, pivot motion, or combination motion thereof, depending on information data stored in the storage device of the control device.

In addition, although the description has been made for the case where the information processing apparatus 300 outputs the teach data that contains the teach point information as the motion information for a virtual robot, the present disclosure is not limited to this. For example, the information processing apparatus 300 may output trajectory data, as the motion information for a virtual robot, which is obtained by performing computation by using the teach data.

The present invention can also be achieved by providing a program, which performs one or more functions of the above-described embodiments, to a system or a device via a network or a storage medium, and by one or more processors, which are included in the system or the device, reading and executing the program. In addition, the present invention can also be achieved by using a circuit, such as an ASIC, which performs one or more functions.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

The present invention can improve the user workability for the simulation.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An information processing apparatus includes an information processing portion (311) configured to simulate behavior of a virtual robot (100A) and a virtual workpiece (W11A) in a virtual environment. The information processing portion (311) is configured to set a linking condition (trsfl) for linking the virtual workpiece (W11A) with a predetermined portion of the virtual robot (100A).

## Claims

1. An information processing apparatus comprising:
an information processing portion (311) configured to simulate behavior of a virtual robot (100A) and a virtual workpiece (W11A) in a virtual environment,
wherein the information processing portion (311) is configured to set a linking condition (trsfl) for linking the virtual workpiece (W11A) with a predetermined portion of the virtual robot (100A).

2. The information processing apparatus according to claim 1, wherein the information processing portion (311) is configured to set, as the linking condition (trsfl), a relative positional relationship between the virtual workpiece (W11A) and the predetermined portion in the virtual environment.

3. The information processing apparatus according to claim 1 or 2, wherein the information processing portion (311) is configured to accept setting of the linking condition (trsfl) performed by inputting a parameter.

4. The information processing apparatus according to any one of claims 1 to 3, wherein the information processing portion (311) is configured to display a button (465) for obtaining a relative positional relationship between the virtual workpiece (W11A) and the predetermined portion in the virtual environment, and
wherein the information processing portion (311) is configured to set, as the linking condition (trsfl), the relative positional relationship between the virtual workpiece (W11A) and the predetermined portion in the virtual environment, obtained by the button (465) being pressed.

5. The information processing apparatus according to any one of claims 1 to 4, wherein the information processing portion (311) is configured to display a setting box (460) in which the predetermined portion is settable.

6. The information processing apparatus according to any one of claims 1 to 5, wherein the information processing portion (311) is configured to accept setting of the linking condition (trsfl) performed by performing drawing in the virtual environment.

7. The information processing apparatus according to claim 6, wherein the information processing portion (311) is configured to display the linking condition (trsfl) that is set by performing the drawing, as a model.

8. The information processing apparatus according to claim 6, wherein the drawing is performed by performing at least one of click, drag, and drop by using a mouse (304).

9. The information processing apparatus according to claim 7, wherein the information processing portion (311) is configured to accept an operation that changes a posture of the model.

10. The information processing apparatus according to any one of claims 1 to 9, wherein the information processing portion (311) is configured to set, as the linking condition (trsfl), a relative positional relationship between a first position of the virtual workpiece (W11A) that is used in control and a second position of the predetermined portion that is used in control in the virtual environment.

11. The information processing apparatus according to claim 4, wherein the information processing portion (311) is configured to display the button (465) such that the button corresponds to the virtual workpiece (W11A).

12. The information processing apparatus according to any one of claims 1 to 3, wherein the information processing portion (311) is configured to display a button (468) for changing a reference of a relative positional relationship between the virtual workpiece (W11A) and the predetermined portion in the linking condition (trsfl).

13. The information processing apparatus according to claim 12, wherein the information processing portion (311) is configured to display the reference.

14. The information processing apparatus according to any one of claims 1 to 13, wherein the information processing portion (311) is configured to perform a process for obtaining a motion of the virtual robot (100A) in which the virtual robot (100A) and the virtual workpiece (W11A) do not contact a target object.

15. The information processing apparatus according to claim 14, wherein the information processing portion (311) is configured to
select whether or not to link the virtual workpiece (W11A) with the virtual robot (100A), and
link the virtual workpiece (W11A) with the virtual robot (100A) and obtain a motion of the virtual robot (100A) in which the virtual robot (100A) and the virtual workpiece (W11A) do not contact the target object, in the process if the information processing portion (311) selects to link the virtual workpiece (W11A) with the virtual robot (100A).

16. The information processing apparatus according to any one of claims 1 to 15, wherein the predetermined portion is a virtual end effector.

17. The information processing apparatus according to any one of claims 1 to 16, wherein the information processing portion (311) is configured to link the virtual workpiece (W11A) with the predetermined portion by keeping a relative positional relationship between the predetermined portion and the virtual workpiece (W11A).

18. The information processing apparatus according to claim 14, wherein the target object is set for each of the predetermined portion and the virtual workpiece (W11A).

19. The information processing apparatus according to claim 14, wherein the information processing portion (311) is configured to accept setting of the target object for the predetermined portion.

20. The information processing apparatus according to claim 19, wherein the information processing portion (311) is configured to set the target object for the virtual workpiece (W11A) to be linked with the predetermined portion, based on the target object that is set for the predetermined portion.

21. The information processing apparatus according to claim 14, wherein the information processing portion (311) is configured to
accept setting of a first teach point (P1) and a second teach point (P2), and
obtain an intermediate teach point between the first teach point (P1) and the second teach point (P2) in a case where the virtual robot (100A) with which the virtual workpiece (W1A) is linked is moved from the first teach point (P1) to the second teach point (P2).

22. The information processing apparatus according to claim 14, wherein an algorithm that obtains a motion of the virtual robot (100A) is RRT.

23. A robot system comprising:
the information processing apparatus according to any one of claims 1 to 22;
a robot (100); and
a control apparatus (200) configured to
obtain motion information of the virtual robot (100A) obtained by the information processing apparatus, and
control the robot (100), depending on the motion information.

24. A method of manufacturing products by using the robot system according to claim 23.

25. An information processing method in which an information processing portion (311) simulates behavior of a virtual robot (100A) and a virtual workpiece (W11A) in a virtual environment, the information processing method comprising:
setting, by the information processing portion (311), a linking condition (trsfl) for linking the virtual workpiece (W11A) with a predetermined portion of the virtual robot (100A).

26. A program that causes a computer to execute the information processing method according to claim 25.

27. A computer-readable recording medium storing the program according to claim 26.
